# EUROPEAN PATENT APPLICATION

(11) **EP 4 768 996 A1**
(43) Date of publication of application: **01.07.2026**
(21) Application number: 24888482.7
(22) Date of filing: 17.10.2024
(51) Int. Cl.: G02B 6/36, G02B 6/46

(54) **OPTICAL ADAPTER HOLDING STRUCTURE AND INSERTION/REMOVAL METHOD FOR OPTICAL CONNECTOR**

(30) Priority: 06.11.2023 JP 2023189103
(71) Applicant: Shoden Seiwa Co., Ltd., Tokyo 101-0047 (JP)
(72) Inventor: TAMAKAWA, Yoshihito, Tokyo 141-8515 (JP); CHANAKA SUDHEERA, Muthukumarana Wedikkara Arachchilage, Tokyo 141-8515 (JP)
(74) Representative: Goddar, Heinz J.
(86) International application number: PCT/JP2024/036951
(87) International publication number: WO 2025/100184

(57) **Abstract**

The purpose of the present invention is to provide an optical adapter holding structure that is capable of allowing an optical adapter to swing and suppressing erroneous recognition of connector insertion. A plurality of substantially rectangular mounting holes (9) are arranged side by side in a mounting fixture (7). Each of the mounting holes (9) serves as a site in which an optical adapter (10) is mounted. The mounting fixture (7) is provided with a protrusion (19) that protrudes in a direction facing a flange portion (15) at a substantially central portion in the width direction of the optical adapter (10). A gap is formed between the flange portion (15) and the mounting fixture (7) at sites other than the protrusion (19) on the side of the mounting fixture (7) where the flange portion (15) is disposed. When a prescribed force or greater is applied to a given optical adapter (10) in the arrangement direction thereof, the gap allows the optical adapter (10) to swing in the arrangement direction of the optical adapters (10).

## Description

### TECHNICAL FIELD

The present invention relates to an optical adapter holding structure and the like that are used for coupling communication cables such as optical fiber cables and optical cords.

### BACKGROUND OF THE INVENTION

The number of optical fibers to be laid has continued to rise conventionally due to a rapid increase in optical communication traffic. This has also led to a need of a high-density packaging of optical adapters, which are used at coupling points between optical fiber cables or optical cords. However, when optical adapters are densely packaged, distance between adjacent optical adapters decreases, which leads to a decrease in distance between optical connectors to be connected. For this reason, when inserting or removing an optical connector to or from an optical adapter, it is impossible to leave space for fingers to be inserted between the adjacent optical connectors.

To make space for insertion/removal operations of optical connectors while still densely packaging optical adapters, Patent Document 1, for example, has proposed an optical adapter holding structure in which an optical adapter, to or from which an optical connector to be inserted or removed is to be fitted, is rotated in a direction in which optical adapters are disposed side by side to create space for insertion/removal operations during the insertion/removal operations.

### RELATED ART

[Patent Document 1] Japanese Laid-open Patent Application Publication No. 2022-97841 (JP-A-2022-97841)

### SUMMARY OF THE INVENTION

### (PROBLEMS TO BE SOLVED BY THE INVENTION)

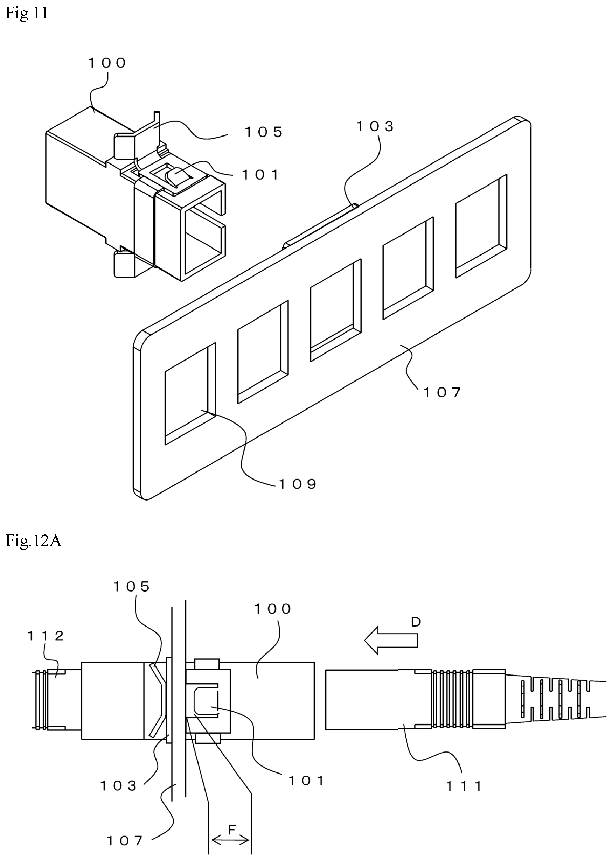

FIG. 11 is an exploded perspective view showing an example of the optical adapter holding structure according to Patent Document 1. In Patent Document 1, mounting holes 109 are arranged in a horizontal row in a mounting fixture 107, and an optical adapter 100 is mounted into each of the mounting holes 109. FIG. 11 shows the optical adapter holding structure in which the optical adapter 100 is to be fixed to the one mounting hole 109.

A hard magnetic body 103 is disposed on each of upper and lower edges of the mounting hole 109 of the mounting fixture 107. Also, upper and lower parts of the optical adapter 100 are provided each with a locking piece 101 and an adherend 105. When the optical adapter 100 is inserted into the mounting hole 109, the locking piece 101 elastically deforms and allows the optical adapter 100 to be inserted into the mounting hole 109, and when the locking piece 101 is pushed through to an opposite side of the mounting fixture 107, the deformation of the locking piece 101 is restored, thereby increasing a diameter thereof and fixing the optical adapter 100 to the mounting fixture 107.

FIG. 12A is a view showing a state in which the optical adapter 100 is mounted to the mounting fixture 107. The illustration shows a state in which a connector 112 is mounted to one side (on the left side in the drawing) of the optical adapter 100. When the optical adapter 100 is mounted to the mounting fixture 107, the mounting fixture 107 (and the hard magnetic body 103) is disposed between a tip of the locking piece 101 and the adherend 105. That is, with respect to force applied in an axial direction of the optical adapter 100 (a left-right direction in the drawing), either contact between the tip of the locking piece 101 and the mounting fixture 107 or contact between the adherend 10 and the hard magnetic body 103 prevents the optical adapter 100 from coming off from the mounting fixture 107.

Here, the adherend 105, which is a soft magnetic body, is attracted to the hard magnetic body 103 in a normal state. Also, when inserting a connector into the optical adapter 100 from one side of the optical adapter 100 (the left side in the drawing), the optical adapter 100 never moves in the axial direction (the right direction in the drawing) due to the contact between the adherend 105 and the hard magnetic body 103.

On the other hand, the optical adapter 100 can swing in a side-by-side direction of the optical adapter 100 (the vertical direction in the drawing) with respect to the mounting fixture 107. Thus, there is a gap (F in the drawing) between the locking piece 101 and the mounting fixture 107 such that the optical adapter 100 can swing with respect to the mounting fixture 107.

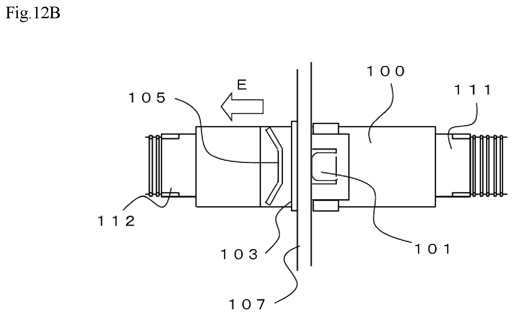

For this reason, when an optical connector 111 is inserted (an arrow D in the drawing) from the other side of the optical adapter 100 (the right side in the drawing), as shown in FIG. 12B, adhesion between the adherend 105 and the hard magnetic body 103 is released by the force from the optical connector 111, and the optical adapter 100 moves with respect to the mounting fixture 107 by the above-mentioned gap F (an arrow E in the drawing). At this time, as mentioned above, the tip of the locking piece 101 is butted against the mounting fixture 107, and thus the optical adapter 100 never moves beyond the mounting fixture 107 in a direction of E.

However, when the optical connector 111 is pushed into the optical adapter 100, an operator receives resistance due to the attractive force until the adherend 105 is separated from the hard magnetic body 103, and at a moment when the adherend 105 and the hard magnetic body 103 are separated, the optical adapter 100 moves in the axial direction (in a pressing direction) and the operator feels the tip of the locking piece 101 hit the mounting fixture 107. This may be misunderstood by the operator as the click feeling that occurs when the optical connector 111 is completely inserted into the optical adapter 100.

For example, when force required to insert the optical connector 111 into the optical adapter 100 exceeds the attractive force between the adherend 105 and the hard magnetic body 103, the optical adapter 100 moves before the optical connector 111 is completely inserted into the optical adapter 100 as mentioned above. Thus, even though the optical connector 111 is not completely inserted into the optical adapter 100, the operator may erroneously recognize that the optical connector 111 has been inserted into the optical adapter 100 because the optical connector 111 is pushed in by the gap F and operator receives a sensation of the locking piece 101 and the mounting fixture 107 being butted against each other.

On the other hand, if the attractive force between the hard magnetic body 103 and the adherend 105 is increased such that the attractive force is sufficiently larger than the force of inserting the optical connector 111 into the optical adapter 100, the above-mentioned problem would not occur. However, insertion resistance of the optical connector 111 into the optical adapter 100 is not constant since the optical connector 111 has some size variation depending on the manufacturer thereof. Also, to increase the attractive force between the hard magnetic body 103 and the adherend 105, it is necessary to increase a thickness of the adherend 105 or to increase a contact area between the hard magnetic body 103 and the adherend 105. However, if the attractive force between the adherend 105 and the hard magnetic body 103 is too large, force required to swing the optical adapter 100 is to be increased, which may deteriorate workability of connector connection.

On the other hand, by making the attractive force between the adherend 105 and the hard magnetic body 103 sufficiently small such that the adherend 105 and the hard magnetic body 103 are immediately separated when the optical connector 111 is inserted into the optical adapter 100, it is possible to suppress erroneous recognition of insertion/removal sensation of the optical connector 111 since the resistance due to the attractive force is reduced. However, in this way, the adherend 105 may easily be separated from the hard magnetic body 103 in the normal state and this makes it difficult to maintain a state in which the optical adapter 100 is aligned substantially perpendicularly to the mounting fixture 107.

The present invention was made in view of such problems. It is an object of the present invention to provide an optical adapter holding structure that is capable of allowing an optical adapter to swing and suppressing erroneous recognition of connector insertion.

### (MEANS FOR SOLVING PROBLEMS)

To achieve the above object, a first aspect of the present invention is an optical adapter holding structure including a mounting fixture having a plurality of mounting holes that are provided side by side, an optical adapter to be mounted into one of the plurality of mounting holes, and a swing mechanism that allows the optical adapter to swing with respect to the mounting fixture. The swing mechanism includes an adherend mounted to the optical adapter, a hard magnetic body or a soft magnetic body provided on the mounting fixture, a retaining portion that holds the mounting fixture in between and suppresses the optical adapter from coming off from the mounting fixture, and a locking piece provided on the optical adapter. The adherend can be attracted to the hard magnetic body or the soft magnetic body. The optical adapter is inserted into one of the plurality of mounting holes and the adherend is disposed between the hard magnetic body or the soft magnetic body and the locking piece, and the optical adapter can slide with respect to the adherend in an insertion direction of the optical adapter. There is a gap between the retaining portion and the mounting fixture, or between the locking piece and the adherend. When a force greater than a predetermined value is applied to the any given optical adapter, the gap allows the optical adapter to swing in a direction in which the optical adapters are provided side by side.

The first aspect of the present invention may be an optical adapter holding structure including a mounting fixture having a plurality of mounting holes that are provided side by side, an optical adapter to be mounted into one of the plurality of mounting holes, and a swing mechanism that allows the optical adapter to swing with respect to the mounting fixture. The swing mechanism may include an adherend mounted to the optical adapter, a hard magnetic body or a soft magnetic body provided on the mounting fixture, a retaining portion that holds the mounting fixture in between and suppresses the optical adapter from coming off from the mounting fixture, and a locking piece provided on the optical adapter. The adherend can be attracted to the hard magnetic body or the soft magnetic body. The optical adapter may be inserted into one of the plurality of mounting holes and the adherend is disposed between the hard magnetic body or the soft magnetic body and the retaining portion, and the optical adapter can slide with respect to the adherend in an insertion direction of the optical adapter. There may be a gap between the retaining portion and the adherend, or between the locking piece and the mounting fixture. When a force greater than a predetermined value is applied to the any given optical adapter, the gap may allow the optical adapter to swing in a direction in which the optical adapters are provided side by side.

The retaining portion may be a flange portion that protrudes toward a direction orthogonal to a direction in which the optical adapters are provided side by side.

At least one of the mounting fixture and the retaining portion may be provided with a protrusion at a substantially central portion of a swinging direction of the optical adapter, the protrusion protruding in a direction in which the mounting fixture and the retaining portion face each other.

The protrusion may be disposed on the mounting fixture that faces the flange portion.

The adherend may have a convex shape protruding toward the mounting fixture in a plan view, with a flat portion at a center thereof and substantially arc shapes on both sides of the flat portion.

A central attractive portion may be provided in vicinity of the flat portion of the adherend such that an area of a surface facing the hard magnetic body or the soft magnetic body is larger than that of the other arc-shaped parts, and the locking piece may be capable of being locked by the central attractive portion.

According to the first aspect of the present invention, since there is a gap between the retaining portion or the locking piece and the mounting fixture, applying a force greater than a predetermined value to the given optical adapter in the side-by-side direction of the optical adapters allows the optical adapter to swing in the direction. Thus, when inserting or removing an optical connector, adjacent optical connectors can be swung in directions separating away from the targeted optical connector, which facilitates the connecting operation.

Also, since the adherend and the optical adapter are separate bodies, the optical adapter can slide with respect to the adherend in an insertion/removal direction of the optical adapter into or from the mounting fixture. Thus, when the optical connector is pushed into the optical adapter, the hard magnetic body or the soft magnetic body is never separated from the adherend. That is, when the optical connector is pushed into the optical adapter, a state in which the adherend is attracted to the hard magnetic body or the soft magnetic body is maintained. As mentioned above, although there is a gap between the optical adapter and the mounting fixture, the optical adapter slides with almost no resistance and the operator does not mistakenly takes that for the resistance felt at the time of inserting the optical connector into the optical adapter. This can suppress erroneous insertion of the optical connector by the operator.

Also, by forming the adherend, which attracts the hard magnetic body or the soft magnetic body, as a separate body from the optical adapter, a thickness of the adherend can be adjusted in any way without considering the ease of mounting thereof etc. to the optical adapter.

Also, if a protrusion is formed at a substantial center of the swinging direction on a facing surface between the retaining portion and the mounting fixture, the gap between the optical adapter and the mounting fixture can be reduced at least by a height of the protrusion. This can suppress an amount of movement of the optical adapter when the optical connector is pushed into the optical adapter. Even in such the case, it is possible to have a sufficient gap between the mounting fixture and the retaining portion at parts other than the protrusion (on both sides of the protrusion in the swinging direction), thereby allowing the above-mentioned swinging motion.

Also, with the protrusion being provided on the mounting fixture, there is no need to form a protrusion on the flange portion of the optical adapter. Thus, there is no need to change the shape of the optical adapter.

Also, if the adherend has a convex shape protruding toward the mounting fixture with the flat central portion and substantially arc shapes on both sides of the central portion, the hard magnetic body or the soft magnetic body can be more stably attracted at the central portion of the adherend. Also, when the optical adapter is swung, the adherend can be rotated (swung) with respect to the mounting fixture without getting caught.

Furthermore, by providing the central attractive portion in vicinity of the flat portion of the adherend so as to increase the attracted area between the hard magnetic body and the soft magnetic body, the central attractive portion can be utilized as a locking portion with the locking piece and, at the same time, the optical adapter can be held in a direction substantially perpendicular to the mounting fixture due to a balance between forces in the swing mechanism.

A second aspect of the present invention is a method for inserting or removing an optical connector to or from the optical adapter holding structure according to the first aspect of the present invention. The method includes, when inserting or removing the optical connector to or from any of the optical adapters, swinging the other optical adapters that are adjacent to the optical adapter in a direction in which the optical adapters are provided side by side by using the swing mechanism to create space around the optical adapter, and returning the other optical adapters to original positions by using the swing mechanism after the insertion/removal operation is completed.

According to the second aspect of the present invention, workability is good and an insertion/removal operation of a connector can be reliably performed.

### (EFFECTS OF THE INVENTION)

The present invention can provide an optical adapter holding structure that is capable of allowing an optical adapter to swing and suppressing erroneous recognition of connector insertion.

### BRIEF DESCRIPTION OF DRAWINGS

FIG. 1 is a view showing an optical patch panel 3.
FIG. 2 is a view showing a rack 1.
FIG. 3 is an exploded perspective view before mounting an optical adapter 10 and the like to a mounting fixture 7.
FIG. 4A is a plan view of an optical adapter holding structure 30 in which the optical adapter 10 and the like are mounted to the mounting fixture 7.
FIG. 4B is a plan view of the optical adapter holding structure 30 in which the optical adapter 10 and the like are mounted to the mounting fixture 7.
FIG. 5 is a plan view showing a swinging motion of the optical adapter 10.
FIG. 6 is an exploded perspective view before mounting the optical adapter 10 and the like to a mounting fixture 7a.
FIG. 7 is a plan view of an optical adapter holding structure 30a in which the optical adapter 10 and the like are mounted to the mounting fixture 7a.
FIG. 8A is a plan view showing a swinging motion of the optical adapter 10.
FIG. 8B is an enlarged view of a section C in FIG. 8A.
FIG. 9 is a plan view showing the optical adapter holding structure 30a in which an optical adapter 10a is mounted to the mounting fixture 7.
FIG. 10A is a plan view of an optical adapter holding structure 30c in which an optical adapter 10b is mounted to the mounting fixture 7.
FIG. 10B is a plan view of the optical adapter holding structure 30c in which the optical adapter 10b is mounted to the mounting fixture 7.
FIG. 11 is an exploded perspective view before mounting a conventional optical adapter 100 to a mounting fixture 107.
FIG. 12A is a view showing a step of inserting an optical connector 111 into the conventional optical adapter 100.
FIG. 12B is a view showing a step of inserting the optical connector 111 into the conventional optical adapter 100.

### DETAILED DESCRIPTION

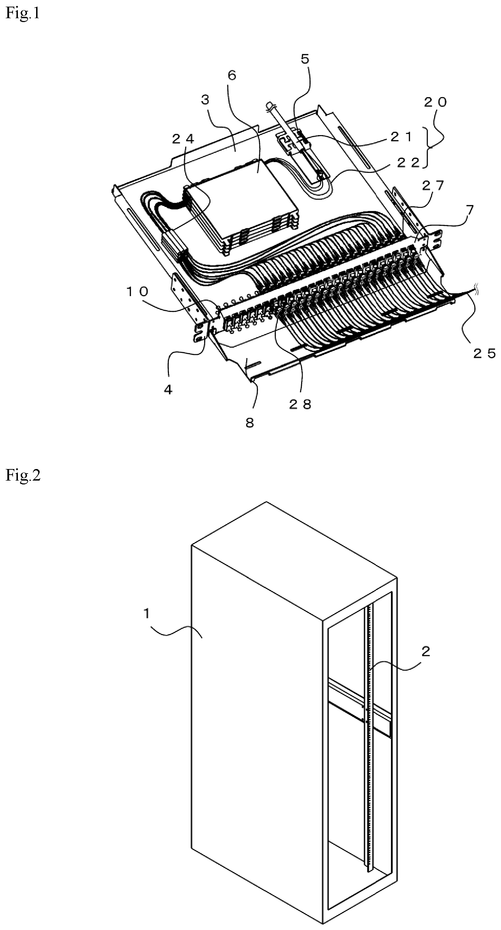

Hereinafter, some embodiments of the present invention will be described in detail with reference to the accompanying drawings. FIG. 1 is a view showing an optical patch panel 3, which is one exemplary embodiment of the present invention, and FIG. 2 is a view showing a rack 1. The rack 1 is a 19-inch rack, for example, and the optical patch panel 3 is mounted on the rack 1, and a mounting portion 4 of the optical patch panel 3 is fixed to a frame 2 of the rack 1 by using screws or the like.

An external cable 20 is introduced from a back face side of the optical patch panel 3, and an external cable fixing portion 5 provided at the rear of the optical patch panel 3 fixes the external cable 20 to the optical patch panel 3. A cable sheath 21 of the external cable 20 is removed inside the optical patch panel 3, and optical fibers 22 inside are wired to an optical fiber-splicing tray 6. The optical fibers 22 and a connector-attached conversion cord 24, which has an optical connector such as SC, LC, or MPO etc. (hereinafter, simply referred to as "SC etc."), are spliced together by fusion or the like. The spliced portions are accommodated inside the optical fiber-splicing tray 6 along with the extra lengths of the optical fibers 22 and the connector-attached conversion cord 24 such as SC etc.

A plate-shaped mounting fixture 7 to which an optical adapter 10 such as SC etc. can be mounted is provided at a front side of the optical patch panel 3. A cord-receiving tray 8 is provided further front side of the mounting fixture 7. The cord-receiving tray 8 can receive connector-attached in-office cords 25 from underneath.

A plurality of the optical adapters 10 are mounted onto the mounting fixture 7. An external cable connector 27 is inserted into the optical adapter 10 from the rear side, and an in-office cable connector 28 of the connector-attached in-office cord 25 is inserted into the optical adapter 10 from the front side. The external cable 20 to be connected with the optical fiber can be switched by changing the optical adapter 10 to which the in-office cable connector 28 is to be inserted.

A structure of the optical patch panel 3 is not limited to the illustrated example. For example, although the example shows a case in which the external cable 20 without a connector is introduced from the rear side of the optical patch panel 3, a connector-attached cord or a connector-attached cable may also be introduced. In such cases, the structure of the optical patch panel may not include the optical fiber-splicing tray 6.

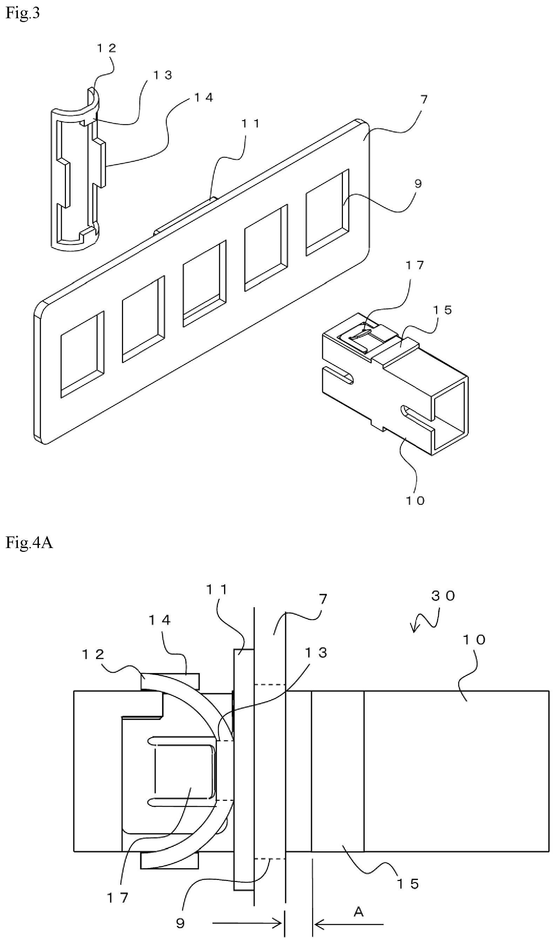

Next, an optical adapter holding structure will be described. FIG. 3 is an exploded perspective view before mounting the optical adapter 10 and the like to the mounting fixture 7. The optical adapter holding structure according to the present embodiment includes the mounting fixture 7, the optical adapter 10 and an adherend 12 that are disposed respectively on either sides of the mounting fixture 7 in the middle, and so on.

A plurality of substantially rectangular mounting holes 9 are provided side by side on the mounting fixture 7. Each of the mounting holes 9 is a part to which the optical adapter 10 is to be mounted. For simplification, FIG. 3 shows an example in which the optical adapter 10 and the like are mounted to only one of the mounting holes 9.

A hard magnetic body 11 is fixed to the mounting fixture 7 on one side (the back side in the drawing) of the mounting fixture 7. The hard magnetic body 11 is a plate-like magnet made of ferrite or neodymium, for example. The hard magnetic body 11 is fixed to a vicinity of each of edge portions of the mounting hole 9 in a direction orthogonal to a side-by-side direction of the optical adapter 10 (hereinafter, the side-by-side direction of the optical adapter 10 will be referred to as a width direction, and the direction orthogonal to the side-by-side direction of the optical adapter 10 will be referred to as a vertical direction). The hard magnetic body 11 may be disposed separately for each mounting hole 9, or may be disposed integrally in the width direction of the mounting fixture 7 so as to span all the mounting holes 9.

The adherend 12 is disposed on the one side (the back side in the drawing) of the mounting fixture 7. The adherend 12 formed of a soft magnetic body has a shape in which a central portion of a substantially frame-like material is curved, having, in a plan view, a convex shape protruding toward the mounting fixture 7, the central portion being a flat portion, and both sides of the flat portion being in substantially arc shapes. The substantially arc shapes include any curved shapes that are gently curved. With the flat portion being attracted to the hard magnetic body 11, attracted sate can be maintained more stably compared to other arc-shaped portions. Also, a central attractive portion 13 is provided at each vicinity of the upper and lower flat portions of the adherend 12 (i.e. in vicinity of the substantial center of the width direction, which is closest to the mounting fixture 7). The central attractive portions 13 are provided protruding in vertical facing directions, respectively, such that areas of facing surfaces thereof with the hard magnetic body 11 are larger than those of the other arc-shaped portions other than the flat portions. Thus, the central attractive portions 13 have larger areas for exerting attractive force with the hard magnetic body 11 than the other arc-shaped parts (parts other than the central attractive portions 13).

Also, a guide portion 14 is provided at a center of a straight portion that is provided in a vertical direction connecting the upper and lower arc-shaped portions of the adherend 12 (i.e., at a substantial center of the vertical direction of the adherend 12). The guide portion 14 protrudes toward the mounting fixture 7 (toward the optical adapter 10) on each end side of the width direction of the adherend 12. At this time, a pair of facing surfaces of the guide portions 14 are substantially parallel flat surface portions. In a plan view, the guide portion 14 is formed so as not to protrude beyond the central attractive portion 13 (toward the mounting fixture 7).

Note that the shape of the adherend 12 is not limited to the illustrated shape. For example, the central attractive portion 13 and the guide portion 14 are not always necessary. Also, the upper and lower arc shapes may be in other shapes, such as a shape formed of a plurality of flat surfaces, being bent at bent portions.

The optical adapter 10 has a substantially rectangular cross section perpendicular to an optical axis direction, and a flange portion 15 is provided on each of upper and lower surfaces of the optical adapter 10. The flange portion 15 is formed across the entire width direction of the optical adapter 10, protruding outward from the upper and lower surfaces. A total height of the optical adapter 10 including the flange portions 15 is greater than a height of the mounting hole 9, and thus the flange portion 15 serves as a retaining portion when the optical adapter 10 is inserted into the mounting hole 9. That is, the flange portion 15 is disposed on a side opposite to the hard magnetic body 11 with the mounting fixture 7 in between so as to be the retaining portion that suppresses the optical adapter 10 from passing through to the side of the mounting fixture 7 on which the hard magnetic body 11 is disposed.

A locking piece 17 having a spring-plate shape is formed on each of the upper and lower surfaces of the optical adapter 10 on a tip side of the optical adapter 10. The locking piece 17 is provided facing toward the flange portion 15 at a position apart from the flange portion 15.

FIG. 4A is a plan view showing an optical adapter holding structure 30 in which the optical adapter 10 and the adherend 12 are mounted to the mounting fixture 7. As mentioned above, the adherend 12 made of a soft magnetic body is disposed on the one side of the mounting fixture 7 (on the side on which the hard magnetic body 11 is provided), and the optical adapter holding structure 30 is formed by inserting the optical adapter 10 from the other side of the mounting fixture 7.

Here, when the optical adapter 10 is inserted into the mounting hole 9, the locking piece 17 can deform by being pressed by an edge portion of the mounting hole 9. The deformation of the locking piece 17 is restored when the optical adapter 10 is pushed into the mounting fixture 7 (the mounting hole 9) until a tip of the locking piece 17 completely passes through the mounting fixture 7 and the adherend 12.

The total height of the optical adapter 10 at the flange portions 15 and a total height of the adherend 12 that is to be locked by the locking piece 17 are greater than the vertical height of the mounting hole 9. Thus, the flange portions 15 and the adherend 12 interpose the mounting fixture 7 (the edge portions of the mounting hole 9) so that the optical adapter 10 is mounted to the mounting fixture 7. That is, when the optical adapter 10 is inserted into the mounting hole 9, the locking piece 17 is locked on a rear side of the central attractive portion 13 of the adherend 12, which is disposed on the one side of the mounting fixture 7. Also, on the one side of the mounting fixture 7, the adherend 12 is disposed between the hard magnetic body 11 and the locking piece 17. In this wing, the optical adapter 10 and the adherend 12 are mounted to the mounting fixture 7.

As shown in FIG. 4A, a space between inner surfaces of the facing guide portions 14 is substantially equal to a width of the optical adapter 10. That is, a main body of the optical adapter 10 is inserted into a space between the guide portions 14. As mentioned above, the guide portions 14 have approximately parallel planar portions with predetermined lengths in an insertion direction of the optical adapter 10. Thus, by interposing and holding the optical adapter 10 with the guide portions 14, it is possible to suppress shaking of the adherend 12 with respect to the optical adapter 10.

Also, a width of the mounting hole 9 is sufficiently larger than the width of the optical adapter 10. Thus, a predetermined clearance is formed between the optical adapter 10 and each edge portion of the mounting hole 9. Also, as mentioned above, when the optical adapter 10 is inserted into the mounting hole 9 and in a state in which the hard magnetic body 11 and the adherend 12 are attracted to each other, there is a gap (A in the drawing) between the flange portion 15 and the mounting fixture 7 at parts other than a protrusion of the mounting fixture 7. Thus, when a predetermined force or greater is applied to any optical adapter 10 in the side-by-side direction thereof, such the gap A and the like allow the optical adapter 10 to swing in the side-by-side direction of the optical adapter 10 within a range until an end portion of the flange portion 15 comes into contact with the mounting fixture 7. That is, the above configuration functions as a swing mechanism that allows the optical adapter 10 to swing.

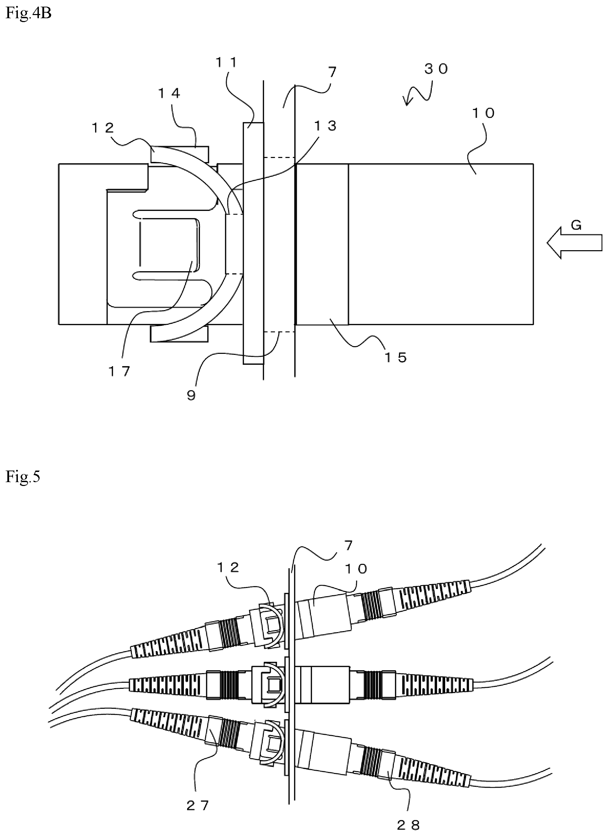

Here, the adherend 12 is a separate body from the optical adapter 10, and the adherend 12 is not fixed with respect to the optical adapter 10. Thus, as shown in FIG. 4B, when the hard magnetic body 11 and the adherend 12 are attracted to each other, the optical adapter 10 can slide with respect to the adherend 12 in the insertion direction of the optical adapter 10 (an arrow G in the drawing). That is, as mentioned above, the gap is formed between the locking piece 17 and the adherend 12 on the one side, or between the flange portion 15 and the mounting fixture 7 on the other side of the mounting fixture 7. Thus, the optical adapter 10 can slide in the insertion direction thereof (the left-right direction in the drawing) by such the gap.

At this time, the state in which the adherend 12 and the hard magnetic body 11 are attracted to each other is maintained. Thus, the optical adapter 10 can slide with almost no resistance, being independent from attractive force between the hard magnetic body 11 and the adherend 12. Thus, for example, when an optical connector is to be inserted into the right side of the optical adapter 10 in the state shown in FIG. 4A, the optical adapter 10 slides with almost no resistance until the flange portion 15 comes into contact with the mounting fixture 7 (the arrow G in FIG. 4B). Thus, the operator does not feel resistance at the time of inserting the optical connector into the optical adapter 10 or receive sensation of the optical connector being engaged with the optical adapter 10 when being pushed in, thereby suppressing erroneous insertion.

FIG. 5 is a view illustrating a method of insertion/removal of an optical connector with respect to the optical adapter holding structure 30, showing a state in which a plurality of the optical adapters 10 are provided side by side and some thereof swing. For example, in FIG. 5, when inserting or removing an in-office cable connector 28 with respect to the middle optical adapter 10 on the one side of the mounting fixture 7 (on the right side in the drawing), operation space can be created by swinging the other adjacent optical adapters 10.

As above, although the adjacent optical adapters 10 are disposed extremely close to each other, when an optical connector is inserted into or removed from the given optical adapter 10, by swinging the other optical adapters 10 adjacent to the given optical adapter 10 in the side-by-side direction of the optical adapters 10 using the swing mechanism, the space can be created around the given optical adapter 10 and the connector connection operation can be easily performed.

After completing the operation, the optical adapters 10 try to return to a more stable state. For example, the flat portion of the adherend 12 (the vicinity of the center portion) is attracted more stably to the hard magnetic body 11 than the other arc-shaped parts thereof. Also, since the central attractive portion 13 has a larger area of the surface facing the hard magnetic body 11, the central attractive portion 13 is more strongly attracted to the hard magnetic body 11 than the other parts. Thus, after completing the operation, the swing mechanism allows the adjacent optical adapters 10 to return to the original positions. As above, a predetermined force or greater applied to any of the optical adapters 10 allows the optical adapter 10 to swing in a direction in which the force is received, and when the force is offloaded, the optical adapter 10 can be held in a direction substantially perpendicular to the mounting fixture 7. That is, the optical adapter 10 can be held in the direction substantially perpendicular to the mounting fixture 7 due to a balance between forces in the swing mechanism.

Note that even when the external cable connectors 27 is pushed strongly into the optical adapter 10, the adherend 12 is in contact with the hard magnetic body 11 and thus the optical adapter 10 does not move in the pushing direction and the operator can push the in-office cable connector 28 into the optical adapter 10 with certainty.

On the other hand, when inserting the in-office cable connector 28 into the optical adapter 10, as mentioned above, the optical adapter 10 is pushed in without resistance until the flange portion 15 comes into contact with the mounting fixture 7 (FIG. 4B). Thus, the attraction between the hard magnetic body 11 and the adherend 12 is maintained and the operator does not receive any resistance like the sensation felt at the time of inserting the in-office cable connector 28 into the optical adapter 10 and completely engaging the in-office cable connector 28 with the optical adapter 10, and thus the operator does not erroneously recognize the sensation of insertion/removal of the in-office cable connector 28. Thus, the in-office cable connector 28 can be pushed more strongly into the optical adapter 10 to reliably connect the two.

Here, it is preferable that a swinging angle of the optical adapter 10 is approximately ±20 degrees or less. If the swinging angle is greater than ±20 degrees, the adjacent connector-attached conversion cords 24 or the connector-attached in-office cords 25 may interfere with each other when the optical adapter 10 swings, and this may cause optical effects. Thus, the width of the mounting hole 9 and the gap A between the flange portion 15 and the mounting fixture 7 are set such that the swinging angle of the optical adapter 10 is within the above range.

As described above, according to the present embodiment, the optical adapter 10 and the adherend 12 are separate bodies and can slide relative to each other, such that the state in which the adherend 12 and the hard magnetic body are attracted to each other is maintained even when the optical adapter 10 moves when inserting an optical connector into the optical adapter 10. Thus, it is possible to reliably connect the two without mistaking the resistance during separation of the hard magnetic body 11 from the adherend 12 from the resistance between the optical connector and the optical adapter 10 during insertion.

Also, on the side on which the flange portion 15 of the mounting fixture 7 is disposed, the gap A is formed between the flange portion 15 (the retaining portion) and the mounting fixture 7. This makes it possible to swing the given optical adapter 10 toward the side-by-side direction of the optical adapters 10 at a predetermined angle, and this facilitates the connector insertion/removal operation, similarly to the conventional structure (FIG. 11, FIG. 12A, and FIG. 12B), even when the optical adapters 10 are close to each other and densely disposed.

Also, due to attraction between the hard magnetic body 11 and the adherend 12, it is possible to suppress shaking of the optical adapter 10 with respect to the mounting fixture 7, allowing the above-mentioned swinging motion at the same time. Also, by providing the central attractive portion 13, the optical adapter 10 can be held in a direction substantially perpendicular to the mounting fixture 7 in a normal state in which no external force is applied.

Also, the adherend 12 and the optical adapter 10 are separate bodies and the adherend 12 is mounted to the optical adapter 10 being interposed by the locking piece 17 and the mounting fixture 7. Thus, compared to a case in which the adherend 12 is formed being integrated with the optical adapter 10, a degree of freedom in designing a plate thickness etc. of the adherend 12 is high.

For example, if an attempt is made to integrally fix an adherend to the optical adapter 10 in advance, it is necessary to provide a structure for fixing the adherend to the optical adapter 10, and in such the case, the processing becomes difficult if the plate thickness increases. However, there is no need to provide the structure for fixing the adherend 12 to the optical adapter 10 and only a locking portion (the central attractive portion 13) of the locking piece 17 that is formed integrally with the optical adapter 10 is to be provided. This simplifies the structure and allows a thicker member to be used. Thus, attractive force relative to the hard magnetic body 11 can be adjusted by the plate thickness of the adherend 12.

Also, providing the guide portion 14 on the adherend 12 can suppress shaking between the adherend 12 and the optical adapter 10.

Although the hard magnetic body 11 is provided on the mounting fixture 7 and the adherend 12 is made of a soft magnetic body in the above-mentioned embodiment, the adherend 12 may be made of a hard magnetic body. In such the case, either the mounting fixture 7 itself may be a soft magnetic body (the soft magnetic body is to be provided on the mounting fixture 7 even in this case) or a plate made of a soft magnetic body that can attract the adherend 12 may be fixed to the mounting fixture 7. Alternatively, both the adherend 12 and the hard magnetic body 11 may be formed of hard magnetic bodies that can attract each other. That is, the hard magnetic body 11 or a soft magnetic body may be provided on the one side of the mounting fixture 7, and the adherend 12 is to be made of a material that can be magnetically attracted to the hard magnetic body 11 or the soft magnetic body provided on the mounting fixture 7. For example, when the hard magnetic body 11 is provided on the mounting fixture 7, the adherend 12 is made of another hard magnetic body or a soft magnetic body that can be attracted to the hard magnetic body 11 provided on the mounting fixture 7. Alternatively, when a soft magnetic body is provided on the mounting fixture 7, the adherend 12 may be made of another hard magnetic body that can be attracted to the soft magnetic body provided on the mounting fixture 7.

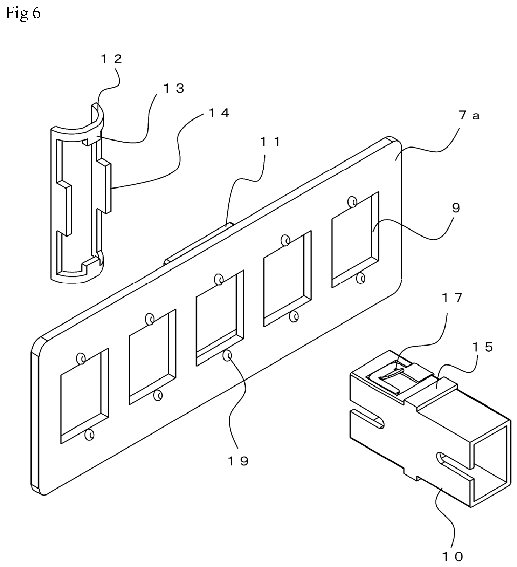

Next, a second embodiment will be described. FIG. 6 is an exploded perspective view showing the second embodiment. In the descriptions hereinafter, the same notations as in FIG. 1 to FIG. 5 will be given to components that perform the same functions as those in the first embodiment, and redundant descriptions will be omitted. In an example shown in FIG. 6, a mounting fixture 7a is used in place of the mounting fixture 7.

As mentioned above, the hard magnetic body 11 is disposed on one side (the back side in the drawing) of the mounting fixture 7a, and a protrusion 19 protruding toward a substantially central portion of the width direction of the optical adapter 10 is provided on the other side (the front side in the drawing) of the mounting fixture 7a. The protrusion 19 is provided at each of upper and lower parts of the mounting hole 9.

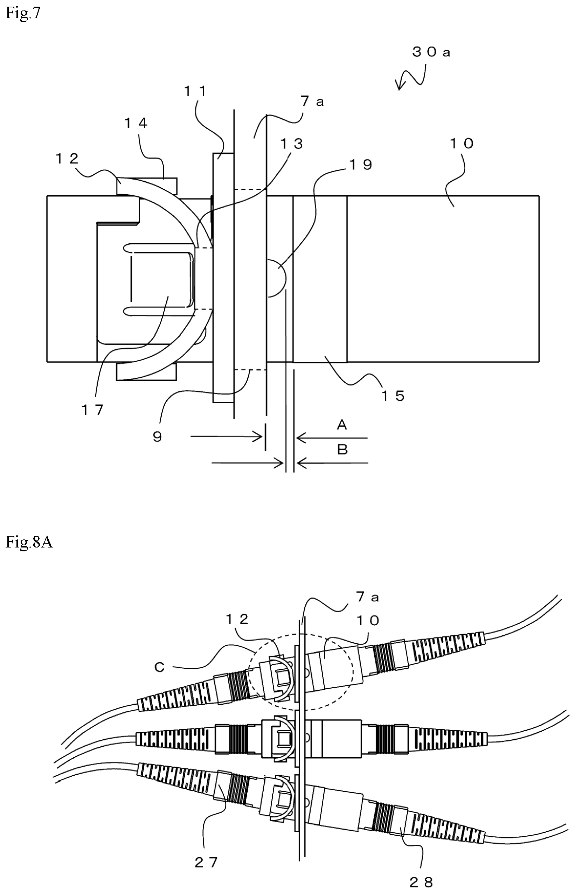

FIG. 7 is a plan view showing an optical adapter holding structure 30a in which the optical adapter 10 and the adherend 12 are mounted to the mounting fixture 7a. As mentioned above, the adherend 12 made of a soft magnetic body is disposed on the one side (the side on which the hard magnetic body 11 is provided) of the mounting fixture 7a, and the optical adapter 10 is inserted from the other side of the mounting fixture 7a to form the optical adapter holding structure 30a.

As mentioned above, when the optical adapter 10 is inserted into the mounting hole 9 and in a state in which the hard magnetic body 11 and the adherend 12 are attracted to each other, there is a gap (A in the drawing) between the flange portion 15 and the mounting fixture 7a at parts other than the protrusions of the mounting fixture 7a. Thus, when a predetermined force or greater is applied to any optical adapter 10 in the side-by-side direction thereof, such the gap A and the like allows the optical adapter 10 to swing in the side-by-side direction of the optical adapters 10 within a range until an end portion of the flange portion 15 comes into contact with the mounting fixture 7a. That is, the above configuration functions as a swing mechanism that can swing the optical adapter 10.

Here, as mentioned above, the mounting fixture 7a is provided with the protrusions 19 protruding in a direction facing the flange portion 15 at the substantially central portion of the width direction of the optical adapter 10 (the swinging direction of the optical adapter 10). Since the protrusions 19 are provided on the mounting fixture 7a In this way, a gap between a tip of the protrusion 19 and the flange portion 15 (B in FIG. 7) is extremely small (or even zero). However, a sufficient gap is formed on each side of the width direction of the flange portion 15, and thus, the protrusion 19 being provided does not inhibit the swinging.

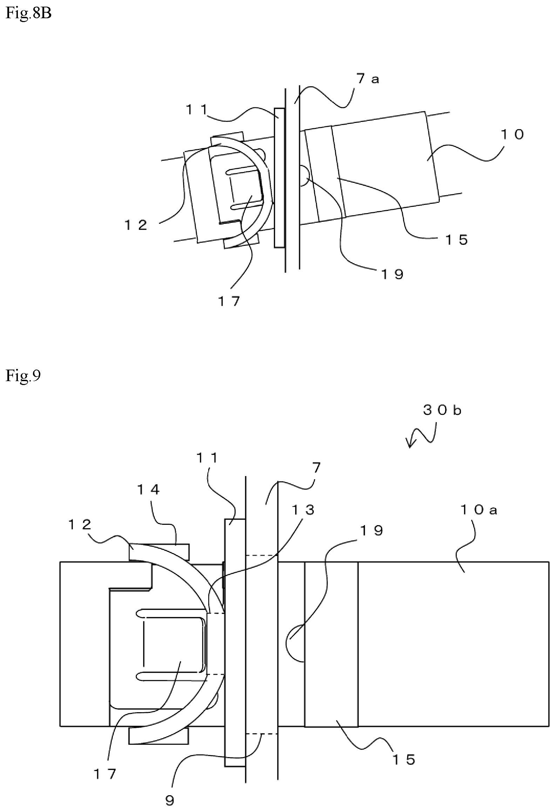

FIG. 8A and FIG. 8B are views illustrating a method of insertion/removal of an optical connector with respect to the optical adapter holding structure 30a. FIG. 8A is a view showing a state in which a plurality of the optical adapters 10 are provided side by side and some thereof swing, and FIG. 8B is an enlarged view of a section C in FIG. 8A. As mentioned above, when the in-office cable connector 28 is to be inserted to or removed from the middle optical adapter 10 on the one side of the mounting fixture 7a (the right side in the drawing), the other adjacent optical adapters 10 are swung to create space for operation.

Here, as mentioned above, the mounting fixture 7a is provided with the protrusions 19 protruding in the direction facing the flange portion 15 at the substantially central portion of the width direction of the optical adapter 10. Since the protrusions 19 are provided on the mounting fixture 7a In this way, a gap between a tip of the protrusion 19 and the flange portion 15 (B in FIG. 7) is extremely small (or even zero). However, a sufficient gap is formed on each side of the width direction of the flange portion 15, and thus even if the protrusion 19 is provided, this does not inhibit the swinging.

Also, as mentioned above, the optical adapter 10 can move in the insertion/removal direction with respect to the mounting fixture 7a. However, the gap B between the protrusion 19 and the flange portion 15 is extremely small. Thus, even when the optical adapter 10 moves until the tip of the protrusion 19 comes into contact with the flange portion 15, such the movement is so small that the operator would not misunderstand the sensation as the sensation at the time of insertion/removal of the in-office cable connector 28. Thus, the operator can more strongly push the in-office cable connector 28 into the optical adapter 10 to reliably connect the both.

Although the protrusions 19 are formed on the surface of the mounting fixture 7a facing the flange portion 15 in the above-mentioned embodiment, the present invention is not limited thereto. For example, FIG. 9 is a view showing an optical adapter holding structure 30b in which an optical adapter 10a is mounted to the mounting fixture 7. As in the optical adapter holding structure 30b, the protrusion 19 may be formed on the surface on the side of the flange portion 15 facing the mounting fixture 7 at the substantially center of the width direction. That is, at least one of the mounting fixture 7a and the flange portion 15 (the retaining portion) may be provided with the protrusion 19 that protrudes in a facing direction thereof at substantially the center of the swinging direction of the optical adapter 10.

As described above, according to the second embodiment, the same effects as in the first embodiment can be obtained. Also, if the protrusions 19 are provided, the amount of movement of the optical adapter 10 in the insertion/removal direction can be suppressed without inhibiting the above-mentioned swinging motion. This can suppress the operator with more certainty from erroneously recognizing the sensation of the optical connector being completely pushed into the optical adapter 10 when an optical connector is inserted into the optical adapter 10.

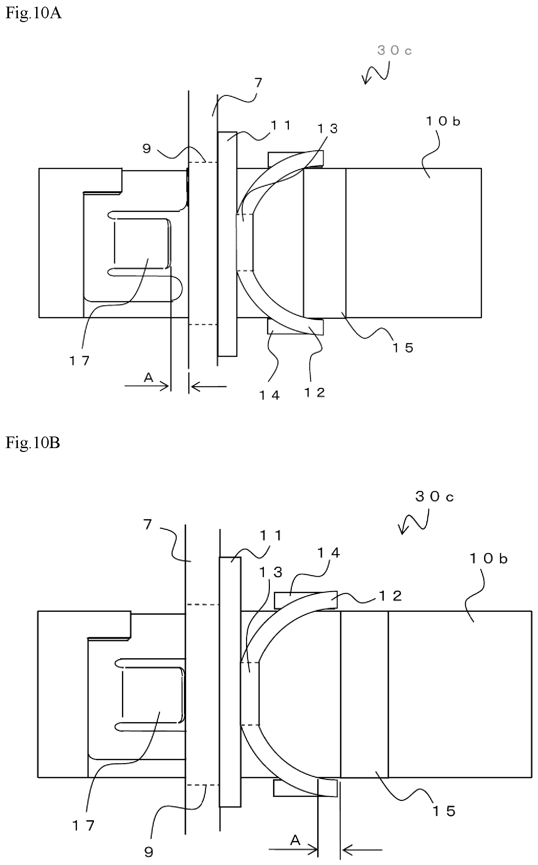

Next, a third embodiment will be described. FIG. 10A and FIG. 10B are views showing an optical adapter holding structure 30c according to the third embodiment. Although the protrusions 19 are omitted in the optical adapter holding structure 30c, the protrusions 19 may be formed on the mounting fixture 7 on a surface facing the locking piece 17. Also, the tip of the locking piece 17 may have an arc shape.

Similarly to the optical adapter 10 and the like, an optical adapter 10b is provide with the flange portion 15 and the locking piece 17 that is disposed facing the flange portion 15. The third embodiment differ from the above-mentioned embodiments in arrangements of the adherend 12 and the hard magnetic body 11. The locking piece 17 is disposed on the one side (the left side in the drawing) of the mounting fixture 7. Also, on the other side (the right side in the drawing) of the mounting fixture 7, the hard magnetic body 11 is fixed and the adherend 12 is disposed so as to face the hard magnetic body 11. The optical adapter holding structure 30c is formed by inserting the optical adapter 10b from the other side of the mounting fixture 7.

As above, the optical adapter 10b is inserted into the mounting hole 9, the flange portion 15 is disposed on a back side of the adherend 12, which is disposed on the other side of the mounting fixture 7, and the locking piece 17 is locked by the mounting fixture 7 on the one side of the mounting fixture 7, so that the optical adapter 10b and the adherend 12 are mounted to the mounting fixture 7. That is, with the mounting fixture 7 in the middle, the flange portion 15 and the locking piece 17 are disposed on both sides of the mounting fixture 7, and the adherend 12 is disposed between the hard magnetic body 11 and the flange portion 15. The flange portion 15 may not be provided over an entire width of the optical adapter 10b.

As shown in FIG. 10A, when the optical adapter 10b is inserted into the mounting hole 9 until the flange portion 15 and the adherend 12 comes into contact with each other, a gap (A in the drawing) is formed between the locking piece 17 and the mounting fixture 7 in a state in which the hard magnetic body 11 and the adherend 12 are attracted to each other. Note that when the flange portion 15 and the adherend 12 comes into contact with each other, the optical adapter 10b cannot be inserted any further. Thus, also in the present embodiment, the flange portion 15 serves as a retaining portion for the optical adapter 10b.

Here, as mentioned above, in the state in which the hard magnetic body 11 and the adherend 12 are attracted to each other, the optical adapter 10b is slidable relative to the adherend 12 in the insertion direction of the optical adapter 10b. That is, as shown in FIG. 10B, when the optical adapter 10b is moved until the locking piece 17 and the mounting fixture 72 comes into contact with each other, the gap A is formed between the adherend 12 and the flange portion 15 in the state in which the hard magnetic body 11 and the adherend 12 are attracted to each other.

The phrase "the gap is formed between the adherend 12 and the flange portion 15." means that the adherend 12 and the flange portion 15 are not in contact with each other when the optical adapter 10b is inserted straight to the mounting fixture 7. In this way, in the present embodiment, the gap is formed either between the flange portion 15 and the adherend 12 or between the locking piece 17 and the mounting fixture 7. Thus, the optical adapter 10b can slide in the insertion/removal direction thereof (the left-right direction in the drawing) by such the gap.

At this time, the adherend 12 and the hard magnetic body 11 are kept being attracted to each other. Thus, the optical adapter 10b can slide with almost no resistance, being independent from the attractive force between the hard magnetic body 11 and the adherend 12. Thus, the operator does not feel resistance at the time of inserting the optical connector into the optical adapter 10b or receive sensation of the optical connector being engaged with the optical adapter 10b when being pushed in, thereby suppressing erroneous insertion.

Also, when a predetermined force or greater is applied to the given optical adapter 10b in the side-by-side direction thereof, the gap allows the optical adapter 10b to swing in the side-by-side direction of the optical adapter 10b within a range until the end portion of the locking piece 17 comes into contact with the mounting fixture 7, or within a range until the flange portion 15 comes into contact with the adherend 12. That is, the above configuration functions as a swing mechanism that can swing the optical adapter 10b.

According to the third embodiment, the same effects as in the first embodiment can be obtained. As above, the adherend 12 may be disposed on either side of the mounting fixture 7.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### (DESCRIPTION OF NOTATIONS)

- 1: rack
- 2: frame
- 3: optical patch panel
- 4: mounting portion
- 5: external cable fixing portion
- 6: optical fiber-splicing tray
- 7, 7a: mounting fixture
- 8: cord-receiving tray
- 9: mounting hole
- 10, 10a, 10b: optical adapter
- 11: hard magnetic body
- 12: adherend
- 13: central attractive portion
- 14: guide portion
- 15: flange portion
- 17: locking piece
- 19: protrusion
- 20: external cable
- 21: cable sheath
- 22: optical fiber
- 24: connector-attached conversion cord
- 25: connector-attached in-office cord
- 27: external cable connector
- 28: in-office cable connector
- 30, 30a, 30b, 30c: optical adapter holding structure
- 100: optical adapter
- 101: locking piece
- 103: hard magnetic body
- 105: adherend
- 107: mounting fixture
- 109: mounting hole
- 111, 112: optical connector

## Claims

1. An optical adapter holding structure comprising:
a mounting fixture having a plurality of mounting holes that are provided side by side;
an optical adapter to be mounted into one of the plurality of mounting holes; and
a swing mechanism that allows the optical adapter to swing with respect to the mounting fixture,
the swing mechanism comprising:
an adherend to be mounted to the optical adapter;
a hard magnetic body or a soft magnetic body provided on the mounting fixture;
a retaining portion that holds the mounting fixture in between and suppresses the optical adapter from coming off from the mounting fixture; and
a locking piece provided on the optical adapter, wherein
the adherend can be attracted to the hard magnetic body or the soft magnetic body;
the optical adapter is inserted into one of the plurality of mounting holes and the adherend is disposed between the hard magnetic body or the soft magnetic body and the locking piece, and the optical adapter can slide with respect to the adherend in an insertion direction of the optical adapter;
there is a gap between the retaining portion and the mounting fixture, or between the locking piece and the adherend; and
when a force greater than a predetermined value is applied to the any given optical adapter, the gap allows the optical adapter to swing in a direction in which the optical adapters are provided side by side.

2. An optical adapter holding structure comprising:
a mounting fixture having a plurality of mounting holes that are provided side by side;
an optical adapter to be mounted into one of the plurality of mounting holes; and
a swing mechanism that allows the optical adapter to swing with respect to the mounting fixture,
the swing mechanism comprising:
an adherend to be mounted to the optical adapter;
a hard magnetic body or a soft magnetic body provided on the mounting fixture;
a retaining portion that holds the mounting fixture in between and suppresses the optical adapter from coming off from the mounting fixture; and
a locking piece provided on the optical adapter, wherein
the adherend can be attracted to the hard magnetic body or the soft magnetic body;
the optical adapter is inserted into one of the plurality of mounting holes and the adherend is disposed between the hard magnetic body or the soft magnetic body and the retaining portion, and the optical adapter can slide with respect to the adherend in an insertion direction of the optical adapter;
there is a gap between the retaining portion and the adherend, or between the locking piece and the mounting fixture; and
when a force greater than a predetermined value is applied to the any given optical adapter, the gap allows the optical adapter to swing in a direction in which the optical adapters are provided side by side.

3. The optical adapter holding structure according to claim 1, wherein
the retaining portion is a flange portion that protrudes toward a direction orthogonal to a direction in which the optical adapters are provided side by side.

4. The optical adapter holding structure according to claim 3, wherein
at least one of the mounting fixture and the retaining portion is provided with a protrusion at a substantially central portion of a swinging direction of the optical adapter, the protrusion protruding in a direction in which the mounting fixture and the retaining portion face each other..

5. The optical adapter holding structure according to claim 4, wherein
the protrusion is disposed on the mounting fixture that faces the flange portion.

6. The optical adapter holding structure according to claim 3, wherein
the adherend has a convex shape protruding toward the mounting fixture in a plan view, with a flat portion at a center thereof and substantially arc shapes on both sides of the flat portion.

7. The optical adapter holding structure according to claim 6, wherein
a central attractive portion is provided in vicinity of the flat portion of the adherend such that an area of a surface facing the hard magnetic body or the soft magnetic body is larger than that of the other arc-shaped parts; and
the locking piece is locked by the central attractive portion.

8. A method for inserting or removing an optical connector to or from the optical adapter holding structure according to any one of claims 1 to 7, the method comprising:
when inserting or removing the optical connector to or from any of the optical adapters, swinging the other optical adapters that are adjacent to the optical adapter in a direction in which the optical adapters are provided side by side by using the swing mechanism to create space around the optical adapter; and
returning the other optical adapters to original positions by using the swing mechanism after the insertion/removal operation is completed.
